# EUROPÄISCHE PATENTANMELDUNG

(11) **EP 4 549 216 A1**
(43) Veröffentlichungstag der Anmeldung: **07.05.2025**
(21) Anmeldenummer: 24193514.7
(22) Anmeldetag: 08.08.2024
(51) Int. Cl.: B60K 35/10, B60K 35/22, B60R 1/22, B60R 1/24, B60R 1/26, B62D 33/06

(54) **FAHRZEUGKABINE MIT EINER VISUALISIERUNGSEINRICHTUNG, LANDWIRTSCHAFTLICHE ARBEITSMASCHINE UND VERFAHREN**

(30) Priorität: 30.10.2023 DE 102023129910
(71) Anmelder: CLAAS KGaA mbH, 33428 Harsewinkel (DE)
(72) Erfinder: Quednau, Alexander, 73776 Altbach (DE); Mildt, Natalie, 73776 Altbach (DE); Grevinga, Markus, 48369 Saerbeck (DE); Matthies, Markus, 33609 Bielefeld (DE); Wagner, Thomas, 33803 Steinhagen (DE); Bohl, Maximilian, 48231 Warendorf (DE); Blind, Alain, 48231 Warendorf (DE)
(74) Vertreter: CLAAS Gruppe

(57) **Zusammenfassung**

Die Erfindung betrifft eine Fahrzeugkabine (10) und eine landwirtschaftliche Arbeitsmaschine (1), vorzugsweise Traktor oder Erntemaschine, mit einer solchen Fahrzeugkabine (10), wobei die Fahrzeugkabine (10) eine Visualisierungseinrichtung (30) umfasst, und wobei die Visualisierungseinrichtung (30) zur Anzeige von Inhalten (41, 42, 43, 44) eine an einer oder an jeder A-Säule (11) angeordnete vordere Visualisierungseinheit (31) und/oder eine an einer B-Säule (12) angeordnete hintere Visualisierungseinheit (32) aufweist.

## Beschreibung

Die vorliegende Erfindung betrifft eine Fahrzeugkabine und eine landwirtschaftliche Arbeitsmaschine mit einer solchen Fahrzeugkabine nach den Oberbegriffen der Ansprüche 1 und 14. Die Erfindung betrifft ferner ein Verfahren nach Anspruch 15.

Aus dem Stand der Technik sind Fahrzeugkabinen für landwirtschaftliche Arbeitsmaschinen bekannt. Die DE 10 2022 108 925 A1 betrifft eine Fahrzeugkabine, bei der eine darin angeordnete Visualisierungseinrichtung vorgesehen ist. Die dort offenbarten Visualisierungseinheiten der Visualisierungseinrichtung in Form von Monitoren dienen in ihrer Hauptfunktion als Spiegel und sind willkürlich in der Fahrzeugkabine angeordnet.

Es ist Aufgabe der vorliegenden Erfindung, die Nachteile des Standes der Technik zu vermeiden und insbesondere eine hinsichtlich Sicherheit und Ergonomie verbesserte Fahrzeugkabine sowie ein entsprechend verbessertes Verfahren zum Betrieb vorzusehen.

Die Aufgabe wird erfindungsgemäß durch die Merkmale der Ansprüche 1, 14 und 15 gelöst.

Vorgeschlagen wird eine Fahrzeugkabine für eine landwirtschaftliche Arbeitsmaschine (kurz: Arbeitsmaschine), vorzugsweise Traktor oder Erntemaschine, eine Visualisierungseinrichtung umfassend, wobei die Visualisierungseinrichtung zur Anzeige von Inhalten eine an einer oder an jeder A-Säule angeordnete vordere Visualisierungseinheit und/oder eine an einer B-Säule angeordnete hintere Visualisierungseinheit aufweist.

In anderen Worten, beispielsweise, wird eine Kabine für ein Arbeitsfahrzeug vorgeschlagen, wobei es sich um ein Arbeitsfahrzeug für landwirtschaftliche Zwecke handelt. Die Kabine ist insbesondere nicht für Nutzfahrzeuge wie Lastkraftwagen gedacht. Bei dem Arbeitsfahrzeug kann es sich um einen Traktor oder um ein Erntefahrzeug handeln. Die vorgeschlagene Kabine weist ein Monitorsystem auf. Das Monitorsystem weist einen oder mehrere Monitore auf. Das Monitorsystem kann Informationen mittels der Monitore wiedergeben, genauer gesagt visuell darstellen bzw. anzeigen. Es wird vorgeschlagen, dass ein Monitor an einer vorderen Tragsäule bzw. A-Säule der Kabine vorgesehen ist, und/oder dass ein Monitor an einer hinteren Tragsäule bzw. B-Säule der Kabine vorgesehen ist, um dort die Informationen wiederzugeben bzw. anzuzeigen.

Dank der Erfindung kann ein in der Fahrzeugkabine befindlicher Maschinenführer einfach und ergonomisch günstig Einsicht auf die Visualisierungseinrichtung(en) nehmen, ohne dass essenzielles Blickfeld aus der Kabine heraus versperrt wird. Insbesondere befindet/befinden sich die Visualisierungseinrichtung(en) so im Blickfeld des Maschinenführers, dass bei Blick auf die darauf wenigstens ein peripheres Blickfeld dauerhaft aus der Fahrzeugkabine heraus weisen kann. So kann trotz indirekter Aufmerksamkeit auf das Geschehen außerhalb von der Fahrzeugkabine erreicht werden, dass hilfreiche Inhalte vom Maschinenführer einsehbar sind.

Vor dem Hintergrund, dass landwirtschaftliche Arbeitsmaschinen in Bezug auf Sichtverhältnisse und Informationsverarbeitung große Anforderungen an einen Maschinenführer bzw. Fahrer solcher landwirtschaftlicher Arbeitsmaschinen stellen, ist es von Vorteil, wenn eine landwirtschaftliche Arbeitsmaschine mit einer Fahrzeugkabine und einer der Fahrzeugkabine zugeordneten Visualisierungseinrichtung ausgerüstet ist, wobei die Visualisierungseinrichtung zumindest eine an der A-Säule und/oder an der B-Säule angeordnete Visualisierungseinheit umfasst und Inhalte anzeigen kann.

Unter der Fahrzeugkabine ist insbesondere ein Fahrzeugaufbau bzw. ein Aufbau für ein Fahrzeug zu verstehen. Die Fahrzeugkabine ist zur Aufnahme vom Maschinenführer und insbesondere zu seinem Schutz eingerichtet. Der Maschinenführer kann von der Fahrzeugkabine aus die Arbeitsmaschine bedienen. Der Maschinenführer kann von der Fahrzeugkabine aus auf das Umfeld der Arbeitsmaschine Einsicht nehmen und beispielsweise eine an der Arbeitsmaschine angekoppelte Arbeitsvorrichtung, z.B. ein Mähwerk, beobachten.

Die Fahrzeugkabine ist insbesondere modular aufgebaut, bevorzugt aufweisend ein Sockelelement und eine Rahmenstruktur. Das Sockelelement ist insbesondere mit der Rahmenstruktur verbunden bzw. daran festgelegt, beispielsweise verschraubt oder verschweißt. Das Sockelelement und die Rahmenstruktur bilden normalerweise eine untrennbare Einheit. Die Rahmenstruktur und/oder das Sockelelement ist/sind regelmäßig wenigstens abschnittsweise eine Schweißkonstruktion und/oder ist aus Metall, insbesondere Stahl, hergestellt, um Stabilität zu schaffen. Es kann auch, wenigstens teilweise, und typischerweise zur Gewichtsersparnis, insbesondere faserverstärkter Kunststoff vorgesehen sein. Die Fahrzeugkabine ist normalerweise dekorativ verkleidet, beschichtet und/oder lackiert, womit ergänzend ein Schmutz- und/oder Korrosionsschutz geschaffen wird.

Die Fahrzeugkabine, bevorzugt die Rahmenstruktur, weist die A-Säule(n) und die β-Säule(n) auf, insbesondere als Tragsäulen für ein Dach bzw. Kabinendach. Das Dach ist normalerweise Teil der Rahmenstruktur und regelmäßig einstückig mit den Säulen bzw. Tragsäulen ausgebildet. Normalerweise sind zwei A-Säulen und zwei B-Säulen vorgesehen, die das Dach tragen. Die Rahmenstruktur bildet vorzugsweise mit Dach und Säulen Aussparungen zur Aufnahme von Fenstern bzw. Scheiben und/oder Zugangstüren aus.

Das Sockelelement weist regelmäßig einen Fußboden auf. Der Fußboden ist typischerweise im Wesentlichen parallel zum Dach angeordnet. Zudem weist das Sockelelement vorzugsweise einen Modulbereich auf, der beispielsweise einen Fahrersitz und bevorzugt einen Beifahrersitz aufweist. Der Modulbereich steht vorzugsweise gegenüber dem Fußboden empor bzw. hervor. Der Modulbereich kann Stauelemente zum Verstauen aufweisen.

Die Arbeitsmaschine bezeichnet insbesondere ein landwirtschaftliches Fahrzeug, beispielsweise Traktor, Erntemaschine oder dergleichen, bei dem ein Aufbau mit einer Kabine bzw. Fahrzeugkabine vorgesehen ist.

Die Visualisierungseinrichtung weist wenigstens eine Visualisierungseinheit auf, bei der es sich um eine vordere Visualisierungseinheit und/oder eine hintere Visualisierungseinheit handeln kann. "Vordere" bzw. "hintere", oder auch "obere", indiziert hierbei insbesondere die räumliche Anordnung der jeweiligen Visualisierungseinheit in der Fahrzeugkabine und bezüglich der Fahrtrichtung der Arbeitsmaschine bzw. bezüglich eines Untergrunds unter der Arbeitsmaschine. Die Visualisierungseinrichtung kann eine Steuereinheit aufweisen, die mit der oder mit allen Visualisierungseinheiten datenmäßig verbunden ist, beispielsweise um die Inhalte zu übermitteln und/oder um Eingaben und/oder Messwerte, beispielsweise von der bzw. den Visualisierungseinheiten, zu empfangen. Die Steuereinheit kann mit einer Arbeitsmaschinen-Steuereinheit datenmäßig verbunden sein, beispielsweise um von dieser die Inhalte zu empfangen und/oder um an diese die Eingaben oder Befehle zu übermitteln.

Bei der Visualisierungseinheit handelt es sich in einem einfachen Fall um ein Display, beispielsweise LC-Display (LCD) oder LED-Display, insbesondere OLED-Display. Das Display weist vorzugsweise eine Hintergrundbeleuchtung auf, um einerseits bei Dunkelheit und andererseits bei Tageslicht ablesbar zu sein. Jede Visualisierungseinheit weist normalerweise genau ein Display auf, das beispielsweise im Wesentlichen viereckig bzw. rechteckig in dem Bereich geformt ist, der die Inhalte anzeigen kann. Einzelne Visualisierungseinheiten können auch aus mehreren Displays bestehen, beispielsweise indem die Displays sehr nahe beieinander angeordnet sind. Denkbar ist auch, dass mehrere Displays einer Visualisierungseinheit einen Abstand zueinander aufweisen. So könnte ein Display unten an einer A- bzw. B-Säule und ein Display oben an einer dieser Säule angeordnet sein und noch zu einer vorderen Visualisierungseinheit zählen.

In einer vorteilhaften Ausgestaltung weist die Visualisierungseinrichtung als eine Visualisierungseinheit ein Display auf, das sich längs der A-Säule und/oder der B-Säule erstreckt. Es kann vorgesehen sein, dass wenigstens eine der Visualisierungseinheiten ein Aspektverhältnis von höchstens 3:4, 9:16, 1:2, 1:3, 1:4 oder weniger aufweist und/oder hochkant angeordnet ist. Die Visualisierungseinheit kann vertikal und insbesondere flach an der A/B-Säule angeordnet sein, um möglichst gut im Blickfeld zu liegen und platzsparend vorgesehen zu sein. Bei der Wahl vom Aspektverhältnis ist gedacht, dass eine Höhe größer ist als eine Breite der Visualisierungseinheit, beispielsweise wenigstens doppelt so groß oder mehr. Bevorzugt erstreckt sich zumindest eine der Visualisierungseinheiten über wenigstens ein Viertel, ein Drittel oder eine Hälfte der Höhe und/oder der Breite der jeweiligen A/B-Säule.

Vorteilhaft kann eine an einem/dem Dach angeordnete obere Visualisierungseinheit der Visualisierungseinrichtung vorgesehen sein. Die Visualisierungseinrichtung kann eingerichtet sein, als einen Inhalt wenigstens eine Funktion der Arbeitsmaschine angezeigt bereitzustellen. Die Funktion umfasst typischerweise eine Komfortfunktion, eine Umfeldfunktion und/oder eine Kommunikationsfunktion. Die Komfortfunktion betrifft beispielsweise eine Klimatisierung bzw. eine AC-Funktion der Fahrzeugkabine und/oder des Fahrersitzes, beispielsweise eine Heiz- und/oder Kühlfunktion, eine Radiofunktion bzw. Musikfunktion, und/oder eine Videofunktion bzw. Bildübertragungsfunktion. Die Funktion kann zur internetbasierten Bereitstellung von Inhalten ausgebildet sein. Die Umfeldfunktion betrifft insbesondere Wetterdaten bzw. einen Wetterbericht, beispielsweise in Bezug darauf wie das Wetter an einem jeweiligen Tag wird. Die Kommunikationsfunktion betrifft beispielsweise einen Messengerdienst, einen Videotelefoniedienst, einen Funkdienst und/oder einen Nachrichtendienst. Es kann auch als Funktion eine Notruffunktion vorgesehen sein.

Insbesondere ist die Visualisierungseinrichtung eingerichtet ist, die Funktion mittels einer oder mehrerer Visualisierungseinheiten anzuzeigen. Bevorzugt ist/sind die vordere und/oder die obere Visualisierungseinheit zum Anzeigen der Funktion vorgesehen, weil dies im primären Blickfeld des Maschinenführers liegt und ein regelmäßiger, ergonomischer Zugriff auf die Funktion sich als sinnvoll herausgestellt hat. Es ist ebenfalls denkbar, die Funktion mittels einer Visualisierungseinheit am Fahrersitz bzw. an einer Armlehne, z.B. einer Vierten, anzuzeigen.

Bei einer Weiterbildung der Erfindung ist eine an einer Armlehne angeordnete vierte Visualisierungseinheit der Visualisierungseinrichtung vorgesehen. Vorzugsweise ist je Armlehne eine vierte Visualisierungseinheit vorgesehen. Die vierte Visualisierungseinheit kann zur Einsichtnahme durch einen Maschinenführer verstellbar an der Armlehne angeordnet sein. Typischerweise ist die vierte Visualisierungseinheit von allen Visualisierungseinheiten der Visualisierungseinrichtung die mit Blick auf eine Anzeigefläche die Kleinste oder zumindest eine der Kleineren. So stört die vierte Visualisierungseinheit möglichst wenig innerhalb der Fahrzeugkabine, zumal sie regelmäßig von den A/B-Säulen beabstandet ist und/oder im Wesentlichen mitten in der Fahrzeugkabine angeordnet ist.

Gerade in Kombination mit der vierten Visualisierungseinheit ist ein/der drehbare Fahrersitz vorgesehen. Der Fahrersitz ist insbesondere um eine Drehachse drehbar in der Fahrzeugkabine vorgesehen. Der Fahrersitz weist eine oder weist zwei der Armlehnen auf, von denen eine oder beide Armlehnen mit einer von der vierten Visualisierungseinheit ausgestattet sein kann bzw. diese aufweisen kann.

Bei einer Weiterbildung der Erfindung ist die Visualisierungseinrichtung eingerichtet zur Anzeige von Inhalten in Abhängigkeit von einem vorhandenen Betriebsereignis der Arbeitsmaschine. Bei dem vorhandenen Betriebsereignis kann es sich um einen Betriebsmodus der Visualisierungseinrichtung handeln, der insbesondere in Bezug zu den Betrieb der Arbeitsmaschine bestimmenden Faktoren steht.

Das vorhandene Betriebsereignis umfasst bzw. betrifft beispielsweise einen Arbeitsbetriebszustand. Insbesondere umfasst bzw. betrifft das vorhandene Betriebsereignis einen Rangierbetriebszustand und/oder einen Fahrbetriebszustand. Insoweit kann die Visualisierungseinrichtung erkennen und/oder berücksichtigen, inwieweit die Arbeitsmaschine verwendet wird. So mag der Arbeitsbetriebszustand sich auf diverse Aspekte im landwirtschaftlichen Betrieb beziehen. Grundlegend kann der Arbeitsbetriebszustand eine Ernte bzw. das Ernten von Erntegut betreffen. Beispielsweise kann erkannt werden, ob ein Überladen von Erntegut zu einem Transportfahrzeug als ein Arbeitsbetriebszustand vorliegt. Ein anderer Arbeitsbetriebszustand mag betreffen, ob mit der Arbeitsmaschine und einer angekoppelten Arbeitsvorrichtung Acker gepflügt wird. Der Rangierbetriebszustand kann beispielsweise dadurch definiert sein, dass gerade ein Vorsatz an oder abgekuppelt wird bzw. werden soll, oder dass die Arbeitsmaschine in eine Parklücke geparkt wird. Der Fahrbetriebszustand betrifft regelmäßig ein Fahren auf einer befestigten Straße und/oder auf einem Betriebsgelände, beispielsweise schneller als Schrittgeschwindigkeit oder mehr als doppelt so schnell. Hier wird verwirklicht, dass die Visualisierungseinrichtung angepasst an die Umgebungsbedingungen Inhalte visualisieren wird. So kann dem Maschinenführer im Zusammenhang mit den verschiedenen vorhandenen Betriebsereignissen ein stets passendes Bild an Informationen über die Visualisierungseinrichtung angeboten werden, mit dem der Betrieb der Arbeitsmaschine verbessert gelingen kann.

Es kann vorgesehen sein, dass das vorhandene Betriebsereignis ein Erreichen eines vorbestimmten Grenzwertes durch einen gemessenen und/oder empfangenen Parameter umfasst bzw. betrifft. Das Erreichen des vorbestimmten Grenzwertes kann sich auf ein Überschreiten und/oder Unterschreiten des Grenzwertes beziehen. Der vorbestimmte Grenzwert kann eine maximale/minimale Fahrgeschwindigkeit, ein maximaler/minimaler Lenkwinkel, eine maximale/minimale Aggregatedrehzahl oder -temperatur, oder Ähnliches sein. Der Maschinenführer kann gewarnt werden, wenn er zu langsam / zu schnell fährt oder wenn Parameter vorbestimmte Grenzen überschreiten. Dem Maschinenführer können angepasste Inhalte präsentiert werden, wenn das Erreichen auftritt. Es kann sein, dass der gemessene bzw. empfangene Parameter eine Drehstellung des Fahrersitzes um die Drehachse betrifft. So kann in einer Einstiegs-Drehstellung ein anderer Inhalt angezeigt werden als in einer Fahr-Drehstellung und/oder in einer Ruhe-Drehstellung des Fahrersitzes.

Das vorhandene Betriebsereignis kann umfassen bzw. betreffen, dass eine landwirtschaftliche Arbeitsvorrichtung wirkverbunden mit und/oder Bestandteil der Arbeitsmaschine ist bzw. wird, beispielsweise dass die Arbeitsvorrichtung angekuppelt wird oder dass die Arbeitsmaschine die Arbeitsvorrichtung aufweist. Bei der Arbeitsvorrichtung handelt es sich beispielsweise um einen Mähdrescher, einen Feldhäcksler, ein Mähwerk, einen Wender, einen Schwader, einen Grubber, eine Walze und/oder eine Ladevorrichtung. Die Arbeitsvorrichtung kann als Vorsatzgerät oder als heckseitiges Gerät vorgesehen sein. Es können auch mehrere Arbeitsvorrichtungen, beispielsweise zwei, drei oder mehr, in Kombination mit einer Arbeitsmaschine vorgesehen sein. Insoweit kann die Visualisierungseinrichtung auf Grundlage von Informationen zu einer Arbeitsvorrichtung die Inhalte anzeigen.

Ferner wird eine adaptive ambiente Beleuchtung vorgeschlagen, die Bestandteil der Fahrzeugkabine sein kann. Die Beleuchtung ist insbesondere eingerichtet, physikalische Beleuchtungsparameter der Beleuchtung in Abhängigkeit von dem vorhandenen Betriebsereignis zu verändern. Anders gesagt kann die Beleuchtung sich in ihrer Erscheinung bzw. hinsichtlich der Beleuchtungseigenschaften als Funktion von dem vorhandenen Betriebsereignis verändern. Das vorhandene Betriebsereignis kann in Bezug auf die adaptive ambiente Beleuchtung mit Vorteil von dem gemessenen und/oder empfangenen Betriebsparameter ausgehen. So mag bei Dämmerung eine gedimmte Beleuchtung vorliegen.

Bei einem Ausfall von der Arbeitsvorrichtung kann die Beleuchtung rot gefärbt sein und/oder blinken. Die Beleuchtung kann sehr platzsparend Informationen über ein peripheres Blickfeld des Maschinenführers an den Maschinenführer, insbesondere an sein Unterbewusstsein, transferieren und so die Sicherheit oder die die Effizienz des Betriebs steigern.

In einer weiteren Ausgestaltung ist vorgesehen, dass die Visualisierungseinrichtung zur Entgegennahme von Befehlen durch einen bzw. den Maschinenführer der Arbeitsmaschine eingerichtet ist. Es kann wenigstens ein Befehl zur Änderung des Betriebsereignisses und/oder zur Änderung der Funktion vorgesehen sein. Der Befehl kann von einer/der Steuereinheit empfangen werden und/oder an eine/die Arbeitsmaschinen-Steuereinheit weitergeleitet werden. Beispielsweise kann der Befehl ein Erhöhen/Verringern einer Klimatisierungstemperatur in der Fahrzeugkabine bewirken. Beispielsweise kann der Befehl ein Umschalten eines angezeigten Inhalts betreffen, beispielsweise so dass der auf einer bestimmten Visualisierungseinheit angezeigte Inhalt ein anderer wird und/oder dass dieser (innerhalb der oder auf eine andere Visualisierungseinheit) umpositioniert wird. Der Befehl kann beispielsweise auch den Betriebszustand verändern.

Es kann vorgesehen sein, dass die Visualisierungseinrichtung zur Entgegennahme von wenigstens einem bzw. dem Befehl über eine der Visualisierungseinheiten eingerichtet ist und/oder eine Touchfunktion aufweist. Beispielsweise kann die vordere, die hintere, die obere und/oder die vierte Visualisierungseinheit zur Entgegennahme des Befehls eingerichtet sein, insbesondere hierzu einen Knopf und/oder einen Touchscreen aufweisen. Ein Touchscreen ist mit Bezug auf den Inhalt individuell belegbar und daher sehr flexibel.

Bevorzugt ist vorgesehen, dass die Visualisierungseinrichtung eingerichtet ist, als einen Inhalt ein Videosignal von wenigstens einem im Umfeld der Arbeitsmaschine erfassten Bereich anzuzeigen. Es können mehrere erfasste Bereiche vorgesehen sein, die unterschiedliche Abschnitte des Umfelds betreffen. Insbesondere sind drei oder mehr erfasste Bereiche vorgesehen. Es kann wenigstens eine Kamera vorgesehen sein, um das Videosignal bereitzustellen. Eine Kamera kann einen Bereich oder mehrere Bereiche erfassen.

Ein erster erfasster Bereich ist bevorzugt ein Bereich vor der Arbeitsmaschine. Der erste erfasste Bereich kann erster Bereich genannt werden. Der erste erfasste Bereich liegt beispielsweise wenigstens teilweise direkt vor der Arbeitsmaschine, wenigstens teilweise rechts oder links neben der Arbeitsmaschine. Es ist möglich, dass der erste erfasste Bereich wenigstens teilweise oberhalb von der Arbeitsmaschine liegt. Es können mehrere der ersten erfassten Bereiche vorgesehen sein, z.B. wenn mehrere Kameras zur Erzeugung des Videosignals verwendet werden und/oder wenn ein Videosignal in Abschnitte aufgeteilt wird.

Insbesondere kann vorgesehen sein, dass die Visualisierungseinrichtung eingerichtet ist, die A-Säule wenigstens abschnittsweise mittels der Anzeige von Inhalten auf der vorderen Visualisierungseinheit im Blickfeld eines Maschinenführers wenigstens abschnittsweise unsichtbar erscheinen zu lassen. Alternativ oder ergänzend kann vorgesehen sein, dass die Visualisierungseinrichtung eingerichtet ist, das Dach wenigstens abschnittsweise mittels der Anzeige von Inhalten auf der vorderen Visualisierungseinheit im Blickfeld eines Maschinenführers wenigstens abschnittsweise unsichtbar erscheinen zu lassen. Als Inhalt kommt hier insbesondere der erste bzw. vordere Bereich infrage. Mit anderen Worten, beispielsweise, wird vorgeschlagen, dass ein Videosignal derart erzeugt und mittels der Visualisierungseinrichtung angezeigt wird, dass das angezeigte Videosignal die Visualisierungseinrichtung bzw. -einheit als Schaufenster erscheinen lässt. Insbesondere liegt der erste Bereich mit Vorteil hintergründig zur jeweiligen Visualisierungseinheit. Dies schafft ein größeres Blickfeld des Maschinenführers, was auch die Sicherheit steigern wird, weil Gefahrensituationen schneller erkannt werden können. Auch der Blick nach oben kann nun trotz des Vorhandenseins eines Dachs ermöglicht sein. Ein weiterer Vorteil einer derart gestalteten Visualisierungseinrichtung ist, dass sich die Einsehbarkeit rechts/links beim Einfahren in eine Kreuzung bei langem Maschinenvorbau erheblich verbessert.

Ein zweiter erfasster Bereich ist vorzugsweise ein Bereich hinter der Arbeitsmaschine. Der zweite erfasste Bereich kann rückwärtiger oder hinterer Bereich genannt werden. Dieser Bereich liegt beispielsweise wenigstens teilweise direkt hinter der bzw. rückwärtig zur Arbeitsmaschine, wenigstens teilweise rechts oder links neben der Arbeitsmaschine. Es ist möglich, dass der zweite erfasste Bereich wenigstens teilweise oberhalb von der Arbeitsmaschine liegt. Es können mehrere der zweiten erfassten Bereiche vorgesehen sein, beispielsweise wenn mehrere Kameras zur Erzeugung des Videosignals verwendet werden und/oder wenn ein Videosignal in Abschnitte aufgeteilt wird.

Bevorzugt ist die Visualisierungseinrichtung als Spiegelersatzsystem für die Arbeitsmaschine eingerichtet. Hier kann bevorzugt der zweite erfasste Bereich herangezogen werden, um das Videosignal bzw. den Inhalt bereitzustellen. Für das Spiegelersatzsystem wird typischerweise ein erfasster Bereich teilweise rechts und/oder teilweise links und/oder teilweise rückwärtig von der Arbeitsmaschine mittels der vorderen und/oder der oberen Visualisierungseinheiten angezeigt. Hier können auch Bereiche konfektioniert werden, um als ein Inhalt bereitgestellt zu werden. Es kann auch ein Spurbild der Arbeitsmaschine eingeblendet werden, um den Fahrweg zu erahnen, und zwar dynamisch in Abhängigkeit von einem Lenkwinkel oder auch statisch. Das Spurbild kann sich auf eine Anhängeöse der Arbeitsmaschine beziehen. Das Spiegelersatzsystem verbessert die Einsehbarkeit um die Arbeitsmaschine nach Art eines Weitwinkelspiegels. Es kann auf einen physikalischen Spiegel verzichtet werden.

Ein dritter erfasster Bereich ist vorzugsweise ein bodennaher Bereich und/oder ein aktiver Bereich. Der dritte erfasste Bereich befindet sich insbesondere an, in und/oder im Bereich von einer/der landwirtschaftlichen Arbeitsvorrichtung. Der dritte erfasste Bereich befindet sich insbesondere an einem Werkzeug und/oder einem Schneidwerk der Arbeitsvorrichtung. Der dritte Erfasste Bereich kann ein Inneres eines Erntespeichers und/oder eines Transportfahrzeugs betreffen. Das Transportfahrzeug kann neben der Arbeitsmaschine fahren, um von der Arbeitsmaschine geerntetes Erntegut durch Überladen aufzunehmen. Der Erntespeicher kann Teil der Arbeitsvorrichtung und/oder der Arbeitsmaschine sein.

Die erfassten Bereiche können sich auch wenigstens abschnittsweise überlagen. Beispielsweise können der erste und der zweite erfasste Bereich, der zweite und der dritte erfasste Bereich, und/oder der erste und der dritte erfasste Bereich sich überlagern.

Die Visualisierungseinrichtung ist vorzugsweise eingerichtet, das Videosignal von dem dritten erfassten Bereich mittels der vorderen, hinteren, vierten und/oder oberen Visualisierungseinheit anzuzeigen. Insoweit kann der Maschinenführer eine Einsichtnahme auf bestimmte Bereiche, die meist im Arbeitsbetriebszustand von Interesse sind, vornehmen, ohne die Fahrzeugkabine zu verlassen. Beispielsweise ist es für den Maschinenführer von Interesse, das Umfeld zu beobachten, den Untergrund anzusehen, die Werkzeuge (beispielsweise zur Ernte) zu inspizieren, einen Füllstand (beispielsweise an Erntegut) zu erkennen oder sonstige Dinge zu sehen, die regelmäßig kamerabildlich dargestellt werden.

Die Visualisierungseinrichtung ist vorzugsweise eingerichtet, als einen Inhalt Gefahrinformationen, Betriebsparameter und/oder Betriebseinstellungen der Arbeitsmaschine und/oder Betriebseinstellungen einer/der landwirtschaftlichen Arbeitsvorrichtung anzuzeigen. Gefahrinformationen können beispielsweise Personen im Umfeld der Arbeitsmaschine und/oder der Arbeitsvorrichtung betreffen. Gefahrinformationen können sich auch auf eine Unwetterlage oder auf einen möglicherweise unzureichend befestigten Untergrund beziehen. Betriebsparameter können sich auf klassische technische Informationen zur Arbeitsmaschine und/oder zur Arbeitsvorrichtung beziehen, beispielsweise ein Tankfüllstand, eine Aggregatetemperatur, eine Fahrgeschwindigkeit, ein Druckwert, ein Luftdruck, ein Öldruck, ein Hydraulikdruck, und dergleichen. Betriebseinstellungen können sich auf technische Einstellungen der Arbeitsmaschine und/oder Arbeitsvorrichtung beziehen, beispielsweise Arbeitsdrehzahl, Fördervolumenstrom, Fahrgeschwindigkeit, Druckwert, Luftdruck, Öldruck, Hydraulikdruck, und dergleichen. Sichtlich können sich die Betriebsparameter und die Betriebseinstellungen gleichen bzw. überschneiden. So mag der Betriebsparameter angeben (z.B. als Istwert) was die Betriebseinstellung versucht vorzugeben (z.B. als Sollwert). Derartige Inhalte können bevorzugt mittels der vorderen, oberen und/oder vierten Visualisierungseinheit(en) angezeigt werden. Auch die hintere Visualisierungseinheit(en) kommt/kommen hier infrage. So kann der Maschinenführer dank der so konfigurierten Visualisierungseinrichtung einen Überblick über wichtige Informationen der Arbeitsmaschine bzw. Arbeitsvorrichtung verschaffen, ohne seinen Blick weit abwenden zu müssen und wichtige Aufmerksamkeit zu verlieren.

Mit Vorteil kann vorgesehen sein, dass Inhalte bzw. Videosignale aufbereitet werden, z.B. um angezeigte Inhalte abschnittsweise visualisiert hervorzuheben. Es kann eine Software zur Erkennung vorgesehen sein, beispielsweise in der Visualisierungseinrichtung implementiert. Die Erkennungssoftware kann zur Bereitstellung der Gefahrinformationen dienen. Die Erkennungssoftware kann auch auch zur Bereitstellung eines/des vorhandenen Betriebsereignisses dienen. Die Erkennungssoftware kann Personen im Umfeld erkennen, bestimmte Gegenstände wie Steine oder Hindernisse erkennen, und/oder Erntegut erkennen. Die Erkennungssoftware kann beispielsweise auch unbearbeitetes von bearbeitetem Umfeld unterscheiden und dies entsprechend visualisiert hervorheben.

Ferner wird eine landwirtschaftliche Arbeitsmaschine vorgeschlagen, die die hier beschriebene Fahrzeugkabine und ein Chassis aufweist. Die Fahrzeugkabine ist insbesondere mit dem Chassis verbunden. Bevorzugt ist die Fahrzeugkabine federnd und dämpfend mit dem Chassis verbunden. Insbesondere ist die Fahrzeugkabine nicht schwenkbar und nicht ausfahrbar gegenüber dem Chassis. Die Arbeitsmaschine weist bevorzugt wenigstens ein Bodeneingriffsmittel zur Traktion mit dem Untergrund auf. Bei dem Bodeneingriffsmittel kann es sich um ein Laufrad oder um einen Kettenantrieb handeln. Das Bodeneingriffsmittel bildet regelmäßig die Verbindung der Arbeitsmaschine mit dem Untergrund. Das Bodeneingriffsmittel ist regelmäßig mittels einer Aufhängung bzw. Radaufhängung beweglich, z.B. drehbar und/oder schwenkbar, insbesondere federnd und/oder dämpfend, am Chassis aufgehängt. Bevorzugt sind vier oder sechs Bodeneingriffsmittel vorgesehen, zumeist in Form von Rädern mit profilierten Reifen. Bevorzugt ist das Bodeneingriffsmittel angetrieben und/oder lenkbar mit dem Chassis verbunden. Bevorzugt kann einer der voranstehend erwähnten erfassten Bereiche einen Bereich um das Bodeneingriffsmittel, beispielsweise lenkbar und/oder an einer Vorderachse, umfassen, um mittels des Videosignals Einblick auf die Traktion und etwaige Hindernisse dort zu verschaffen. Vorzugsweise weist die Arbeitsmaschine ein Lenkersatzsystem auf. Das Lenkersatzsystem ist bevorzugt über Steuerelemente an den Armlehnen bedienbar.

Ferner wird ein Verfahren zum Betrieb der hier beschriebenen landwirtschaftlichen Arbeitsmaschine vorgeschlagen. Bei dem Verfahren können Inhalte mittels der Visualisierungseinrichtung angezeigt werden, und zwar in Abhängigkeit von dem vorhandenen Betriebsereignis der Arbeitsmaschine. Bei dem Verfahren können alternativ oder ergänzend Inhalte innerhalb der Visualisierungseinrichtung, insbesondere auf der oder den Visualisierungseinheit(en), positioniert werden. Die Inhalte können die Beschriebenen sein. Die Positionierung wird dabei bevorzugt von dem vorhandenen Betriebsereignis beeinflusst.

Im Rahmen der Offenbarung steht die Abkürzung "bzw." als Kurzform für "beziehungsweise" und soll alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" kann stets durch "und/oder" ersetzt werden. Weitere vorteilhafte Ausgestaltungen sind Gegenstand weiterer Unteransprüche und werden nachfolgend anhand in mehreren Figuren dargestellter Ausführungsbeispiele beschrieben. Es zeigen:
- Figur 1: perspektivische Darstellungen einer erfindungsgemäßen landwirtschaftlichen Arbeitsmaschine sowie einer erfindungsgemäßen Fahrzeugkabine
- Figur 2: Ausgestaltungsvarianten von erfindungsgemäßen Fahrzeugkabinen
- Figur 3: eine Ausgestaltungsvariante der erfindungsgemäßen Arbeitsmaschine
- Figur 4: Ausgestaltungsvarianten von erfindungsgemäßen Arbeitsmaschinen

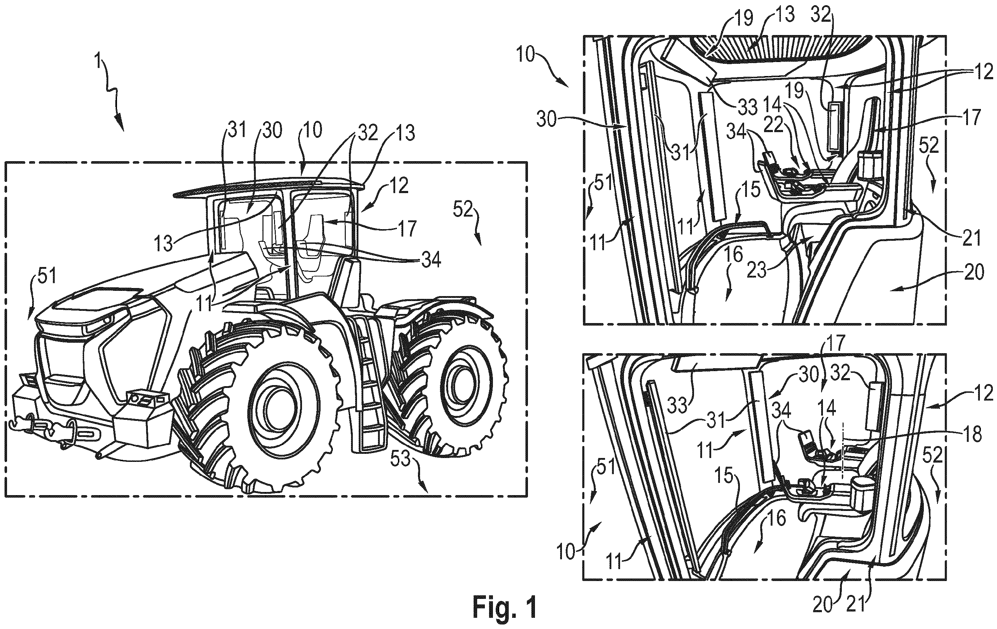

Fig. 1 zeigt linksseitig eine als Traktor ausgebildete landwirtschaftliche Arbeitsmaschine 1. Der Traktor weist vorliegend vorderseitig und rückseitig Verbindungseinrichtungen, beispielsweise Kupplungselemente, zur Verbindung mit jeweils einer oder mehreren Arbeitsvorrichtungen auf.

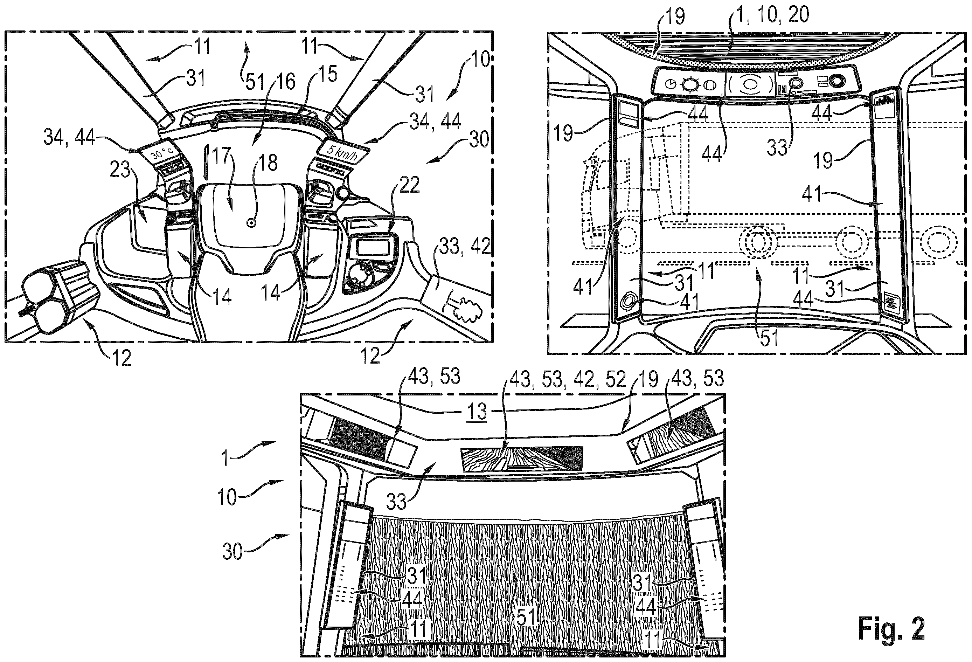

Die Arbeitsmaschine 1 weist ein Chassis und eine daran befestigte Fahrzeugkabine 10 mit einer Visualisierungseinrichtung 30 auf, wobei die Fahrzeugkabine 10 in Fig. 1 rechts oben und rechts unten näher gezeigt ist. Die Visualisierungseinrichtung 30 wird an späterer Stelle noch näher beschrieben. Es wird zunächst auf die allgemeine Ausgestaltung der Arbeitsmaschine 1 eingegangen, um auf dieser Grundlage auf die konkrete Anordnung der Visualisierungseinrichtung 30 in der Arbeitsmaschine 1 mit Blick auch auf Fig. 2 einzugehen.

In Fig. 1 ist die Fahrzeugkabine 10 federnd und dämpfend an dem Chassis festgelegt. Im Betrieb der Arbeitsmaschine 1 kann die Fahrzeugkabine 10 sich im Wesentlichen vertikal zum Untergrund bewegen und betriebsbedingten Schwingungen folgen bzw. diese abbauen. Die Fahrzeugkabine 10 ist nicht schwenkbar und nicht ausfahrbar. Die Arbeitsmaschine 1 weist vier angetriebene Bodeneingriffsmittel bzw. Räder auf. Es sind zwei vordere Räder lenkbar und drehbar an einer Vorderachse und zwei hintere Räder drehbar an einer Hinterachse aufgehängt. Alle Bodeneingriffsmittel sind gefedert und gedämpft am Chassis aufgehängt.

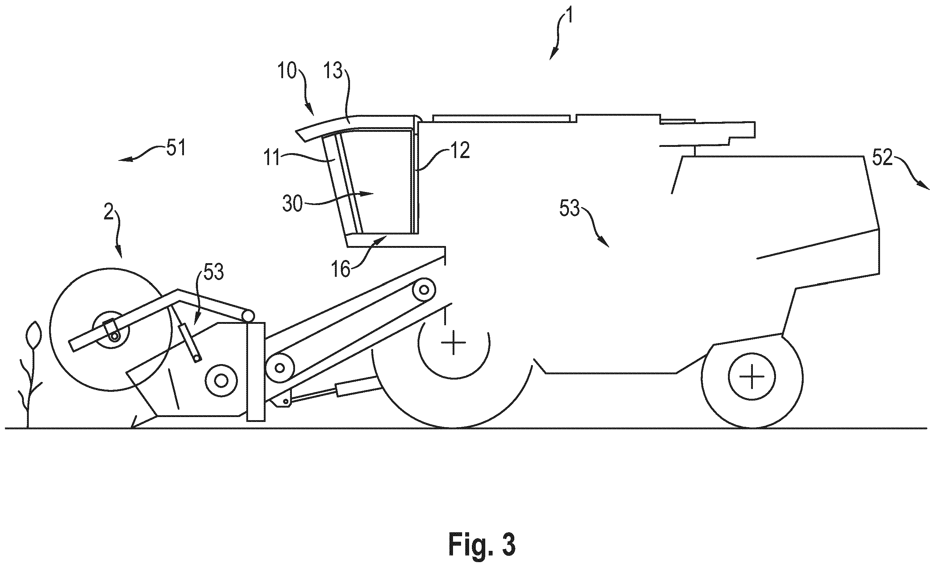

Die Fahrzeugkabine 10 sich auch für andere Arbeitsmaschinen 1, z.B. Erntemaschinen, wie den in Fig. 3 gezeigten Mähdrescher. Es bleibt zu erwähnen, dass der Traktor aus Fig. 1 auch als Erntemaschine eingerichtet werden kann, wenn eine Arbeitsvorrichtung mit dem Traktor verbunden wird, welche Arbeitsvorrichtung zum Ernten von Erntegut vorgesehen ist.

In Fig. 1 rechts ist ersichtlich, dass die Fahrzeugkabine 10 ein Sockelelement 20 und eine Rahmenstruktur 21 aufweist. Die Rahmenstruktur 21, weist zwei A-Säulen 11 und zwei B-Säulen 12 auf, die ein Dach 13 tragen. Vorliegend ist ein Fußboden 16 Bestandteil des Sockelelements 20. Das Sockelelement 20 trägt einen emporstehenden Modulbereich für einen um eine Drehachse 18 drehbaren Fahrersitz 17, der zwei Armlehnen 14 aufweist. Das Sockelelement 20 ist mit der Rahmenstruktur 21 fest verbunden. Das Sockelelement 20 und die Rahmenstruktur 21 sind beschichtete Schweißkonstruktionen aus Stahl. Das Sockelelement 20 umfasst diverse Stauelemente 22. Das Sockelelement 20 umfasst auch einen Beifahrersitz 23 neben dem Fahrersitz 17. Das ist insbesondere in Fig. 2 links ersichtlich.

Die Fahrzeugkabine 10 ist mit Fenstern bzw. Scheiben versehen. Zwischen den A-Säulen 11 ist eine Frontscheibe befestigt. Zwischen einer A-Säule 11 und einer B-Säule 12, linksseitig in Fahrtrichtung der Arbeitsmaschine 1, ist eine nicht detailliert gezeigte, verschließbare Zugangstür mit einer Seitenscheibe angeordnet. Zwischen der anderen A-Säule und der anderen B-Säule 12 ist eine weitere Seitenscheibe angeordnet. Zwischen den B-Säulen 12 ist ein rückwärtiges Fenster, das öffenbar ist, angeordnet. Die Fahrzeugkabine 10 weist einen Fußboden 16 auf. Im Bereich des Fußbodens 16 ist ferner eine Fußstütze 15 festgelegt.

Der Fahrersitz 17 ist belüftet bzw. klimatisierbar, vorliegend zumindest in einem Kopfbereich. Der Fahrersitz 17 ist so beschaffen, dass der Maschinenführer, beispielsweise nach Art einer Rückenlehne eines PKW, gestützt wird. Der Fahrersitz 17 ist im Wesentlichen mittig zwischen den B-Säulen 12 angeordnet. Beispielsweise damit der Maschinenführer einfacher rückwärts schauen kann, ist der Fahrersitz 17 drehbar. Insbesondere kann der Fahrersitz 17 so weit gedreht werden, dass der Maschinenführer mit leichter Kopfbewegung nach rechts oder links einen rückwärtigen Bereich 52, beispielsweise die Kupplungselemente im rückwärtigen Bereich 52, sehen kann. Vorliegend kann der Fahrersitz 17 um wenigstens 90 gedreht werden, um dem Maschinenführer in einer Drehstellung einen Einstieg zu erleichtern und um in einer anderen Drehstellung einen guten Blick ins Umfeld zu verschaffen.

Der Fahrersitz 17 ist gegenüberliegend von der Fußstütze 15 angeordnet. Die Fahrzeugkabine 10 weist kein Lenkrad auf, an dem der Maschinenführer sich festhalten kann. Es ist ein Lenkersatzsystem vorgesehen, das an den Armlehnen 14 über Steuerelemente bedienbar ist. Eine mit der gezeigten Fahrzeugkabine 10 ausgestatteten Arbeitsmaschine 1, beispielsweise diejenige aus Fig. 1 links, kann gänzlich ohne Lenkrad betrieben werden. Hier wirkt die Fußstütze 15 vorteilhaft, womit der Maschinenführer sich sicher im Fahrersitz 17 halten kann.

Die Fahrzeugkabine 10, dargestellt in Fig. 1 sowie in zwei alternativen Varianten in Fig. 2 rechts und unten, weist die Visualisierungseinrichtung 30 auf bzw. umfasst diese, die mehrere Visualisierungseinheiten 31, 32, 33, 34 aufweist, nämlich: zwei vordere Visualisierungseinheiten 31, von denen bei allen Varianten jeweils eine an einer der beiden A-Säulen 11 angeordnet ist, eine rückwärtige bzw. hintere Visualisierungseinheit 32 an einer der B-Säulen 12, zumindest eine obere Visualisierungseinheit 33 am Dach 13, und zwei vierte Visualisierungseinheiten 34 an den Armlehnen 14 des Fahrersitzes 17. Die Visualisierungseinheiten 31, 32, 33, 34 sind jeweils an den besagten Stellen befestigt. Bei den Visualisierungseinheiten 31, 32, 33, 34 handelt es sich vorliegend um Displays, genauer gesagt LCD-Displays zur Anzeige von visualisierbaren Inhalten. Die Displays weisen eine viereckige bzw. rechteckige Bildfläche auf. Die Displays sind hintergrundbeleuchtet. Mit Blick auf Fig. 2 unten kann vorgesehen sein, dass mehrere Displays z.B. die obere Visualisierungseinheit 33 bilden und/oder dass die Visualisierungseinheit 33 gekrümmt ist.

Die Displays der vorderen Visualisierungseinheiten 31 erstrecken sich bei allen Varianten längs der A-Säule 11 bzw. sind hochkant angeordnet. Das Display der hinteren Visualisierungseinheit 32 erstreckt sich längs der B-Säule 12 bzw. ist hochkant angeordnet. Die Visualisierungseinheiten 31 und 32 weisen jeweils ein Aspektverhältnis von wenigstens drei zu eins auf, d.h. die Höhe beträgt wenigstens das Dreifache von der Breite mit Blick auf die Größe des Displays bzw. Bildschirms. Es ist also von einer Hochbild-Anordnung aus Sicht des Fahrersitzes 17 zu sprechen. Dagegen ist die obere Visualisierungseinheit 33 im Wesentlichen in einer Breitbild-Anordnung vorgesehen, vgl. Fig. 2 rechts und unten.

Die Visualisierungseinrichtung 30 ist bei allen Varianten zur Anzeige von Inhalten 44 eingerichtet. Die Inhalte 44 können mittels der Visualisierungseinrichtung 30 als eine Vielzahl von angezeigten Funktionen der Arbeitsmaschine 1 bereitgestellt werden, vgl. Fig. 2. Bei den Funktionen handelt es sich wenigstens um eine Komfortfunktion, eine Umfeldinformation und um eine Kommunikationsinformation. Mit Blick auf Fig. 2 kann ein Maschinenführer über die obere Visualisierungseinheit 33 am Dach 13 und die vierten Visualisierungseinheiten 34 an den Armlehnen 14 auf die Funktionen zugreifen und/oder damit interagieren. Es kann z.B. an der oberen Visualisierungseinheit 33 eine Klimatisierung eingestellt werden, eine Nachricht über einen Messengerdienst oder Telefondienst verschickt bzw. empfangen werden oder ein Radio bedient werden. Es kann an der vierten Visualisierungseinheit 34 auf eine Funktion hinsichtlich einer Arbeitsvorrichtung 2 zugegriffen werden. Andere Visualisierungseinheiten 31 und/oder 32 können auch mit Funktionen belegt werden.

Die vierten Visualisierungseinheiten 34, von denen je Armlehne 14 eine vorgesehen ist, sind zur Einsichtnahme durch den Maschinenführer verstellbar an der Armlehne 14 angeordnet. Die vierten Visualisierungseinheiten 34 können ausgefahren, hochgeklappt und verdreht werden, um im Wesentlichen auf die Drehachse 18 bzw. auf den Fahrersitz 17 zu weisen.

Die Visualisierungseinrichtung 30 ist bei allen Varianten eingerichtet zur Anzeige von Inhalten 41, 42, 43, 44 in Abhängigkeit von einem vorhandenen Betriebsereignis der Arbeitsmaschine 1. Auf die Inhalte 41, 42 und 43 wird später näher eingegangen. Das vorhandene Betriebsereignis umfasst vorliegend einen Arbeitsbetriebszustand (z.B. bei der Ernte, Fig. 2 unten), einen Rangierbetriebszustand und einen Fahrbetriebszustand (z.B. im Verkehr, Fig. 2 rechts). Die Visualisierungseinrichtung 30 kann darauf reagieren, ob und in welcher Art und Weise die Arbeitsmaschine 1 betrieben wird. Rein exemplarisch kann im Fahrbetriebszustand eine Fahrgeschwindigkeit angezeigt werden, z.B. an der A-Säule 11. Es kann im Rangierbetriebszustand eine Videoübertragung aus dem Umfeld angezeigt werden, z.B. an der A-Säule 11, an der B-Säule 12. Es kann auch im Arbeitsbetriebszustand ein Füllstand eines Korntanks einer Arbeitsvorrichtung 2 angezeigt werden, z.B. an der B-Säule 12.

Insbesondere kann das vorhandene Betriebsereignis ein Erreichen eines vorbestimmten Grenzwertes durch einen gemessenen und/oder empfangenen Parameter umfassen. Beispielsweise kann die Visualisierungseinrichtung 30 in Abhängigkeit von einer/der Fahrgeschwindigkeit oder eines Lenkwinkels der Arbeitsmaschine unterschiedliche Inhalte 41, 42, 43, 44 anzeigen. Es ist auch denkbar, dass die Visualisierungseinrichtung 30 in Abhängigkeit von einer Drehstellung des Fahrersitzes 17 um die Drehachse 18 andere Inhalte 41, 42, 43, 44 anzeigt. Die Inhalte 41, 42, 43, 44 können in Abhängigkeit von dem genannten Parameter angezeigt, ausgeblendet, verändert und/oder (um)positioniert werden.

Das vorhandene Betriebsereignis kann umfassen, dass eine Arbeitsvorrichtung 2, beispielsweise ein Mähwerk, wirkverbunden mit und/oder Bestandteil der Arbeitsmaschine 1 ist bzw. wird. Anders gesagt kann die Visualisierungseinrichtung 30 in Abhängigkeit davon, ob ein Arbeitswerkzeug angekuppelt ist oder wird, die Inhalte 41, 42, 43, 44 anzeigen, genauer gesagt anzeigen, ausblenden, verändern und/oder (um)positionieren werden.

Die Fahrzeugkabine 10 weist vorliegend an verschiedenen Stellen eine adaptive ambiente Beleuchtung 19 auf. Die Beleuchtung 19 ist vorliegend jeweils im Bereich des Dachs 13 vorgesehen. Fig. 1 rechts oben zeigt, dass eine adaptive Beleuchtung 19 an der zweiten Visualisierungseinheit 32 vorgesehen sein kann. In Fig. 2 rechts ist erkennbar, dass die Beleuchtung 19 auch an der vorderen Visualisierungseinheit 31 vorgesehen sein kann, beispielsweise als Beleuchtung am Rand. Zudem kann die Beleuchtung 19 so beschaffen sein, dass sie auch in die Sitzlandschaft um den Fahrersitz herum integriert sein kann. Die Beleuchtung 19 ist eingerichtet, physikalische Beleuchtungsparameter der Beleuchtung 19 in Abhängigkeit von dem vorhandenen Betriebsereignis zu verändern. Insoweit kann eine Helligkeit, eine Beleuchtungsfarbe, eine Blinkfrequenz und dergleichen in Abhängigkeit von Umgebungsbedingungen bzw. Parametern angepasst werden. Es ist möglich, dass der Maschinenführer in seinem peripheren Blickfeld durch Wahrnehmung der von den Beleuchtungsparametern variabel beeinflussten Beleuchtung 19 Informationen aufnehmen kann. Die Beleuchtung 19 kann zum Beispiel eine Fehlermeldung durch rote Beleuchtungsfarbe oder einen fehlerfreien Zustand durch grüne Beleuchtungsfarbe indizieren.

Die Visualisierungseinrichtung 30 ist zur Entgegennahme von Befehlen durch den Maschinenführer eingerichtet und weist wenigstens eine Eingabemöglichkeit für einen Befehl auf. Vorliegend sind die vierten Visualisierungseinheiten 34 Touchscreens mit Touchfunktion, insbesondere um mit den angezeigten Inhalten, z.B. Inhalt 44, zu interagieren. Es können Knöpfe vorgesehen sein, die typischerweise neben den Displays angeordnet sind. Einer der Befehle ist vorgesehen zur Änderung des Betriebsereignisses, beispielsweise zum Einschalten der Arbeitsvorrichtung 2. Ein Befehl ist vorgesehen zur Änderung der Funktion, beispielsweise der Klimatisierung.

Die Visualisierungseinrichtung 30 ist bei allen gezeigten Varianten eingerichtet, als einen Inhalt 41, 42, 43 ein Videosignal von wenigstens einem im Umfeld der Arbeitsmaschine 1 erfassten Bereich 51, 52, 53 anzuzeigen. Die Arbeitsmaschine 1, genauer gesagt die Fahrzeugkabine 10, weist nicht näher dargestellte Kameras auf, um die Videosignale zu erzeugen.

Der Inhalt 41 betrifft den vorderen Bereich 51 vor der Arbeitsmaschine 1 als ersten erfassten Bereich 51, genauer gesagt den Bereich in Fahrtrichtung vor dem Traktor. Die Visualisierungseinrichtung 30 ist eingerichtet, die A-Säulen 11 und das Dach 13 wenigstens abschnittsweise mittels der Anzeige von den Inhalten 41 auf der vorderen Visualisierungseinheit 31 im Blickfeld des Maschinenführers abschnittsweise unsichtbar erscheinen zu lassen. Insoweit kann der Maschinenführer prinzipiell durch die A-Säulen 11 und das Dach 13 hindurch gucken, weil der dahinterliegende Anblick, also der erfasste vordere Bereich 41, visualisiert wird. Es sei auf die Fig. 2 rechts verwiesen. Dargestellt ist mit dem Blickfeld des Maschinenführers eine Situation, in der ein LKW vor der Fahrzeugkabine 10 bzw. der Arbeitsmaschine 1 quer entlang fährt. Der LKW ist abschnittsweise hinter den A-Säulen 11 angeordnet bzw. von diesen verdeckt. Es wird auf den Visualisierungseinrichtungen 31 jeweils ein Videosignal vom vorderen Bereich 51 dargestellt. Diese Darstellung ermöglicht es, dem Maschinenführer im Blickfeld den von der A-Säule 11 eigentlich verdeckten Abschnitt des LKWs erscheinen zu lassen. Anders gesagt verschwinden die A-Säulen 11 im Blickfeld des Maschinenführers.

Der Inhalt 42 betrifft den rückwärtigen Bereich 52 als zweiten erfassten Bereich 52 hinter der Arbeitsmaschine 1. Die Visualisierungseinrichtung 30 ist bei den gezeigten Varianten als Spiegelersatzsystem für die Arbeitsmaschine 1 eingerichtet. Es kann auf den Visualisierungseinheiten 31 und/oder 33 mit dem Inhalt Inhalt 42 auch ein rückwärtiger Blick angezeigt werden, um physikalische Rückspiegel entbehrlich zu machen.

Der Inhalt 43 betrifft einen dritten erfassten Bereich 53, der ein bodennaher bzw. aktiver Bereich im Umfeld der Arbeitsmaschine 1 bzw. der Arbeitsvorrichtung 2 ist. Insbesondere ist der dritte erfasste Bereich 53 an einem Schneidwerk der Arbeitsvorrichtung 2 oder in Bodennähe angeordnet, vgl. Fig. 2 unten. Der dritte erfasste Bereich 53 betrifft alternativ oder ergänzend ein Inneres eines Erntespeichers, insbesondere ein Inneres eines Korntanks, der Arbeitsvorrichtung 2. Hier stellt bevorzugt die hintere Visualisierungseinheit 32 den Inhalt 53 dar. Andere der Visualisierungseinheiten 31, 33, 34 können auch den Inhalt 53 darstellen.

Mit Blick auf die Fig. 2 unten ist ersichtlich, dass die oberen Visualisierungseinheiten 33 verschiedene Blicke aus dem Umfeld der Arbeitsmaschine 1 anzeigen können. Entsprechende Videosignale mit Inhalten 43, die von verschiedenen Kameras übertragen werden, werden insoweit mittels an einem Dach 13 angeordnete Displays bzw. Visualisierungseinheiten 33 angezeigt. Der Maschinenführer hat einen fortwährenden Einblick auf aktive Bereiche, beispielsweise auf das noch zu bearbeitende und/der auf das bearbeitete Feld. Hintergründig von den Displays und als Kabinenbeleuchtung ist die ambiente Beleuchtung 19 aktiv.

Die Visualisierungseinrichtung 30 ist jeweils ferner eingerichtet, als den bereits erwähnten Inhalt 44 Gefahrinformationen, Betriebsparameter und Betriebseinstellungen der Arbeitsmaschine 1 bzw. der Arbeitsvorrichtung 2 anzuzeigen. Beispielsweise zeigen in Fig. 2 links die vierten Visualisierungseinheiten 34 Betriebsparameter wie eine Aggregatetemperatur und eine Fahrgeschwindigkeit. Dies kann in Zusammenwirkung mit der adaptiven ambienten Beleuchtung 19 erfolgen. Jedenfalls kommen alle Visualisierungseinheiten 31, 32, 33, 34 für derartige Inhalte 44 in Betracht.

Die beschriebenen Fahrzeugkabinen 10, insbesondere die Arbeitsmaschinen 1, können zur Durchführung des erfindungsgemäßen Verfahrens zum Betrieb verwendet werden. Es können in Abhängigkeit von dem vorhandenen Betriebsereignis der Arbeitsmaschine 1 die Inhalte 41, 42, 43, 44 mittels der Visualisierungseinrichtung 30 angezeigt und innerhalb der Fahrzeugkabine 10 bzw. der Visualisierungseinrichtung 30 positioniert werden.

Mit Blick auf Fig. 3 ist schematisch eine Seitenansicht einer Arbeitsmaschine 1, die als Mähdrescher ausgebildet ist, gezeigt. Der Mähdrescher weist die Fahrzeugkabine 10 auf, die im Wesentlichen wie vorbeschrieben ausgebildet sein kann. Insbesondere sind an A-Säulen 11, B-Säulen 12 und einem Dach 13 nicht näher gezeigte Visualisierungseinheiten einer Visualisierungseinrichtung 30 befestigt vorgesehen, die zum Maschinenführer weisen, um ihm Inhalte anzuzeigen. Die Arbeitsmaschine 1 ist im vorderen Bereich 51 zur Ernte mit einer Arbeitsvorrichtung 2 ausgestattet, wobei gegenüberliegend davon ein hinterer Bereich 52 vorliegt. Ein aktiver Bereich 53 kann das Innere des Mähdreschers oder ein Werkzeug betreffen. Nicht dargestellt ist ein Transportfahrzeug, auf das die Ernte überladen wird. Die Bereiche 51, 52, 53 können von Kameras erfasst werden.

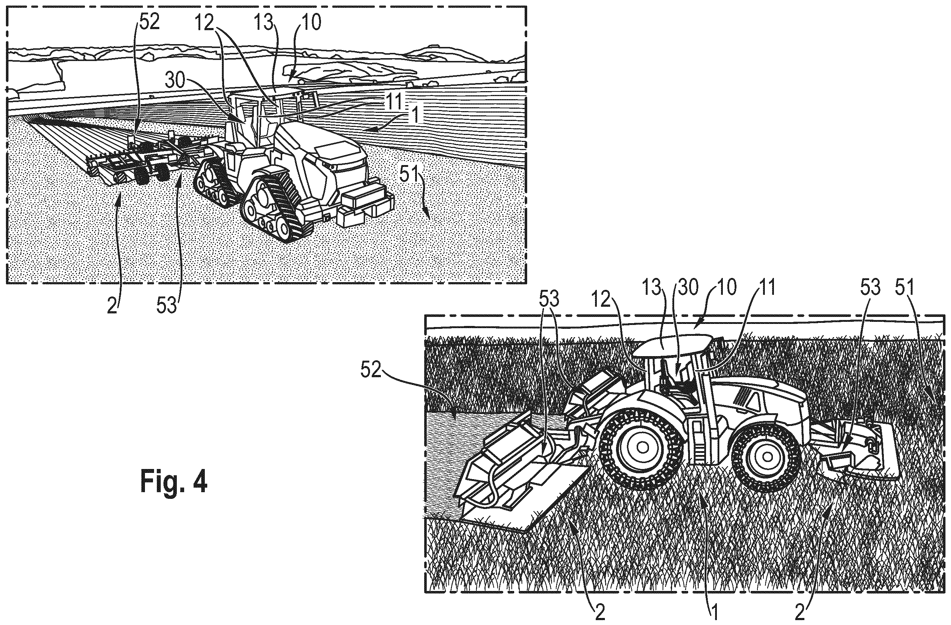

Die Fig. 4 zeigt zwei weitere Varianten von Arbeitsmaschinen 1 mit einer Fahrzeugkabine 10 wie eine der vorbeschriebenen Fahrzeugkabinen 10. Die Fahrzeugkabine 10 weist hier jeweils zwei vorderseitige A-Säulen 11 und zwei rückwärtige B-Säulen 12 auf, wobei die Säulen 11, 12 ein Dach 13 tragen. In der Fahrzeugkabine 10 ist jeweils eine Visualisierungseinrichtung 30 angeordnet und zur Anzeige von Inhalten eingerichtet. Eine Vielzahl von Kameras ist jeweils vorgesehen, um Videosignale als Inhalte für die Visualisierungseinrichtung 30 bereitzustellen. Die Kameras weisen jeweils auf verschiedene Bereiche 51, 52 53.

Die Arbeitsmaschine 1 links in Fig. 4 weist Kettenantriebe auf und ist vorliegend im rückwärtigen Bereich 52 mit einer Arbeitsvorrichtung 2 verbunden. Im vorderen Bereich 51 ist keine Arbeitsvorrichtung 2 vorgesehen. Dank der Visualisierungseinrichtung 30 kann ein Maschinenführer fortwährend und in Abhängigkeit eines vorhandenen Betriebsereignisses (hier: Arbeitsbetriebszustand) Einblick auf den rückwärtigen Bereich 52 und einen aktiven Bereich 53 an der Arbeitsvorrichtung 2 einnehmen. So kann der Maschinenführer beurteilen, ob der Arbeitsbetriebszustand ordentlich abläuft und ob die Arbeitsvorrichtung 2 in Ordnung ist. Rückwärtig von der Arbeitsmaschine 1 ist das Feld umgegraben, während es vorderseitig von der Arbeitsmaschine 1 noch umzugraben ist. Hier kann die Visualisierungseinrichtung 30 beispielsweise dem Maschinenführer Informationen anzeigen, die angeben, welche Route zu fahren ist, wie der Wetterbericht aussieht, oder wie lange es bis zum Arbeitsabschluss dauert.

Die Arbeitsmaschine 1 rechts in Fig. 4 ist ein Traktor, der im vorderen Bereich 51 ein einzelnes Mähwerk als eine Arbeitsvorrichtung 2 aufweist. Insbesondere weist die Arbeitsmaschine 1 im rückwärtigen Bereich 52 zwei separate Mähwerke als weitere Arbeitsvorrichtungen 2 auf. Durch die Visualisierungseinrichtung 30 kann der Maschinenführer in dem gezeigten Arbeitsbetriebszustand in die Schneidwerke, genauer gesagt in einen aktiven Bereich 53, der Mähwerke Einblick nehmen. Rückwärtig von der Arbeitsmaschine 1 ist das Feld bzw. die Wiese gemäht, während es vorderseitig von der Arbeitsmaschine 1 noch zu mähen ist. Der Maschinenführer kann ins Umfeld Einblick nehmen, beispielsweise um zu erkennen, ob der vordere Bereich 51 frei von Gegenständen oder von Personen ist, und/oder um zu erkennen, ob der rückwärtige bzw. hintere Bereich 52 ordnungsgemäß gemäht worden ist.

Die in Fig. 4 dargestellten Arbeitsmaschinen 1 sind jeweils mit dritten bzw. oberen Visualisierungseinrichtungen 30 jeweils am Dach 13 ausgestattet. Hiermit kann jeweils ermöglicht werden, das Dach 13 im Blickfeld des jeweiligen Maschinenführers wenigstens abschnittsweise unsichtbar erscheinen zu lassen. Das ist vorteilhaft, wenn beispielsweise bei eingeschränkter Höhe Durchfahrten erfolgen müssen, um so durch die Einsicht des Maschinenführers Kollisionen zu vermeiden. Die Arbeitsmaschinen 1 weisen überdies die Visualisierungseinrichtungen 30 als Spiegelersatzsysteme auf, die redundant zu den physikalischen Rückspiegeln vorgesehen sind.

Die Visualisierungseinrichtungen 30 können die Inhalte 41, 42, 43, 44 aufbereiten, um darin etwas abschnittsweise hervorzuheben. Meistens wird eine Erkennungssoftware ausgeführt, um Gefahrinformationen anzuzeigen.

### Bezugszeichenliste:

- 1: Arbeitsmaschine
- 2: Arbeitsvorrichtung

- 10: Fahrzeugkabine
- 11: A-Säule
- 12: B-Säule
- 13: Dach
- 14: Armlehne
- 15: Fußstütze
- 16: Fußboden
- 17: Fahrersitz
- 18: Drehachse
- 19: Beleuchtung
- 20: Sockelelement
- 21: Rahmenstruktur
- 22: Stauelemente

- 30: Visualisierungseinrichtung
- 31: Visualisierungseinheit (erste/vordere)
- 32: Visualisierungseinheit (zweite/rückwärtige)
- 33: Visualisierungseinheit (dritte/obere)
- 34: Visualisierungseinheit (vierte/an der Armlehne)

- 41: Inhalt (Videosignal/vorne)
- 42: Inhalt (Videosignal/rückwärtig)
- 43: Inhalt (Videosignal/Werkzeug/Korntank)
- 44: Inhalt (Funktion/Gefahrinformationen/Betriebsparameter/Betriebseinstellungen)

- 51: erfasster Bereich (erster/vorne)
- 52: erfasster Bereich (zweiter/rückwärtig)
- 53: erfasster Bereich (dritter/aktiver Bereich)

## Patentansprüche

1. Fahrzeugkabine (10) für eine landwirtschaftliche Arbeitsmaschine (1), vorzugsweise Traktor oder Erntemaschine, eine Visualisierungseinrichtung (30) umfassend, **dadurch gekennzeichnet, dass**
die Visualisierungseinrichtung (30) zur Anzeige von Inhalten (41, 42, 43, 44) eine an einer oder an jeder A-Säule (11) angeordnete vordere Visualisierungseinheit (31) und/oder eine an einer B-Säule (12) angeordnete hintere Visualisierungseinheit (32) aufweist.

2. Fahrzeugkabine (10) nach einem der voranstehenden Ansprüche, **dadurch gekennzeichnet, dass**
die Visualisierungseinrichtung (30) als eine Visualisierungseinheit (31, 32) ein Display aufweist, das sich längs der A-Säule (11) und/oder der B-Säule (12) erstreckt, und/oder wenigstens eine der Visualisierungseinheiten (31, 32) hochkant angeordnet ist.

3. Fahrzeugkabine (10) nach einem der voranstehenden Ansprüche, **gekennzeichnet durch**
eine an einem Dach (13) angeordnete obere Visualisierungseinheit (33) der Visualisierungseinrichtung (30), vorzugsweise wobei die Visualisierungseinrichtung (30) eingerichtet ist, als einen Inhalt (44) wenigstens eine Funktion der Arbeitsmaschine (1) angezeigt bereitzustellen, die Funktion umfassend eine Komfortfunktion, eine Umfeldfunktion und/oder Kommunikationsfunktion, insbesondere wobei die Visualisierungseinrichtung (30) eingerichtet ist, die Funktion mittels der vorderen (31) und/oder der oberen (33) Visualisierungseinheit anzuzeigen.

4. Fahrzeugkabine (10) nach einem der voranstehenden Ansprüche, **gekennzeichnet durch**
eine an einer Armlehne (14) angeordnete vierte Visualisierungseinheit (34) der Visualisierungseinrichtung (30),
vorzugsweise wobei je Armlehne (14) eine vierte Visualisierungseinheit (34) vorgesehen ist,
bevorzugt wobei die vierte Visualisierungseinheit (34) zur Einsichtnahme durch einen Maschinenführer verstellbar an der Armlehne (14) angeordnet ist,
insbesondere wobei ein, insbesondere um eine Drehachse (18) drehbarer, Fahrersitz (17) der Fahrzeugkabine (10) mit den Armlehnen (14) vorgesehen ist.

5. Fahrzeugkabine (10) nach einem der voranstehenden Ansprüche, **dadurch gekennzeichnet, dass**
die Visualisierungseinrichtung (30) eingerichtet ist zur Anzeige von Inhalten (41, 42, 43, 44) in Abhängigkeit von einem vorhandenen Betriebsereignis der Arbeitsmaschine (1), vorzugsweise wobei das vorhandene Betriebsereignis umfasst:
einen Arbeitsbetriebszustand, und bevorzugt einen Rangierbetriebszustand und/oder
einen Fahrbetriebszustand.

6. Fahrzeugkabine (10) nach dem voranstehenden Anspruch, **dadurch gekennzeichnet, dass**
das vorhandene Betriebsereignis umfasst: ein Erreichen eines vorbestimmten Grenzwertes durch einen gemessenen und/oder empfangenen Parameter; vorzugsweise wobei der gemessene und/oder empfangene Parameter eine Drehstellung eines/des Fahrersitzes (17) um eine/die Drehachse (18) betrifft.

7. Fahrzeugkabine (10) nach einem der voranstehenden zwei Ansprüche, **dadurch gekennzeichnet, dass**
das vorhandene Betriebsereignis umfasst, dass eine landwirtschaftliche Arbeitsvorrichtung (2), beispielsweise Mähdrescher, Feldhäcksler, Mähwerk, Wender, Schwader, Grubber, Walze und/oder Ladevorrichtung, insbesondere als Vorsatzgerät oder als heckseitiges Gerät, wirkverbunden mit und/oder Bestandteil der Arbeitsmaschine (1) ist bzw. wird.

8. Fahrzeugkabine (10) nach einem der voranstehenden drei Ansprüche,
**gekennzeichnet durch**
eine adaptive ambiente Beleuchtung (19), die eingerichtet ist, physikalische Beleuchtungsparameter der Beleuchtung (19) in Abhängigkeit von dem vorhandenen Betriebsereignis zu verändern.

9. Fahrzeugkabine (10) nach einem der voranstehenden Ansprüche, **dadurch gekennzeichnet, dass**
die Visualisierungseinrichtung (30) zur Entgegennahme von Befehlen durch einen Maschinenführer der Arbeitsmaschine (1) eingerichtet ist, vorzugsweise wobei wenigstens ein Befehl vorgesehen ist zur Änderung des Betriebsereignisses und/oder der Funktion, insbesondere wobei die Visualisierungseinrichtung (30) zur Entgegennahme von wenigstens einem Befehl über eine der Visualisierungseinheiten (31, 32, 33, 34) eingerichtet ist und/oder eine Touchfunktion aufweist.

10. Fahrzeugkabine (10) nach einem der voranstehenden Ansprüche, **dadurch gekennzeichnet, dass**
die Visualisierungseinrichtung (30) eingerichtet ist, als einen Inhalt (41, 42, 43) ein Videosignal von wenigstens einem im Umfeld der Arbeitsmaschine (1) erfassten Bereich (51, 52, 53) anzuzeigen,
vorzugsweise wobei ein erster erfasster Bereich (51) ein Bereich vor der Arbeitsmaschine (1) ist, insbesondere umfassend, dass die Visualisierungseinrichtung (30) eingerichtet ist, die A-Säule (11) und/oder das Dach (13) wenigstens abschnittsweise mittels der Anzeige von Inhalten (41) auf der vorderen Visualisierungseinheit (31) im Blickfeld eines Maschinenführers wenigstens abschnittsweise unsichtbar erscheinen zu lassen.

11. Fahrzeugkabine (10) nach dem voranstehenden Anspruch, **dadurch gekennzeichnet, dass**
die Visualisierungseinrichtung (30) als Spiegelersatzsystem für die Arbeitsmaschine (1) eingerichtet ist und/oder ein zweiter erfasster Bereich (52) ein rückwärtiger Bereich hinter der Arbeitsmaschine (1) ist.

12. Fahrzeugkabine (10) nach einem der voranstehenden zwei Ansprüche, **dadurch gekennzeichnet, dass**
ein dritter erfasster Bereich (53) ein bodennaher und/oder aktiver Bereich, insbesondere an einem Werkzeug und/oder an einem Schneidwerk, einer/der landwirtschaftlichen Arbeitsvorrichtung (2) und/oder ein Inneres eines Erntespeichers, insbesondere Korntank, einer/der landwirtschaftlichen Arbeitsvorrichtung (2) ist, vorzugsweise wobei die Visualisierungseinrichtung (30) eingerichtet ist, das Videosignal von dem dritten erfassten Bereich (53) mittels der vorderen (31), hinteren (32) und/oder oberen (33) Visualisierungseinheit anzuzeigen.

13. Fahrzeugkabine (10) nach einem der voranstehenden Ansprüche, **dadurch gekennzeichnet, dass**
die Visualisierungseinrichtung (30) eingerichtet ist, als einen Inhalt (44) Gefahrinformationen, Betriebsparameter und/oder Betriebseinstellungen der Arbeitsmaschine (1) und/oder Betriebseinstellungen einer/der landwirtschaftlichen Arbeitsvorrichtung (2) anzuzeigen, bevorzugt anzuzeigen mittels der vorderen (31), oberen (33) und/oder vierten (34) Visualisierungseinheit.

14. Landwirtschaftliche Arbeitsmaschine (1) **gekennzeichnet durch**
eine Fahrzeugkabine (10) nach einem der Ansprüche 1 bis 13 und ein Chassis, wobei die Fahrzeugkabine (10), bevorzugt federnd und dämpfend, mit dem Chassis verbunden ist.

15. Verfahren zum Betrieb einer nach Anspruch 14 ausgebildeten landwirtschaftlichen Arbeitsmaschine (1), wobei in Abhängigkeit von dem vorhandenen Betriebsereignis der Arbeitsmaschine (1) Inhalte (41, 42, 43, 44) mittels der Visualisierungseinrichtung (30) angezeigt werden und/oder innerhalb der Visualisierungseinrichtung (30), insbesondere auf der oder den Visualisierungseinheit(en) (31, 32, 33, 34), positioniert werden.
